(19)

Europäisches Patentamt

European Patent Office

Office européen des brevets

(11) **EP 3 327 915 A1**

(12) **EUROPEAN PATENT APPLICATION**

(43) Date of publication:
**30.05.2018 Bulletin 2018/22**

(21) Application number: **17202978.7**

(22) Date of filing: **22.11.2017**

(51) Int Cl.:
**H02M 1/42** (2007.01)     **H02M 3/156** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.11.2016   IT 201600119833**

(71) Applicants:
• **OSRAM GmbH**
  **80807 München (DE)**
  Designated Contracting States:
  **AL AT BE BG CH CY CZ DE DK EE ES FI FR GB GR HR HU IE IS LI LT LU LV MC MK MT NL NO PL PT RO RS SE SI SK SM TR**

• **Osram S.p.A. - Societa' Riunite Osram Edison Clerici**
  **20126 Milano (IT)**

(72) Inventor: **LUCCATO, Mr. Daniele**
  **I-31029 Vittorio Veneto (Treviso) (IT)**

(74) Representative: **Meindl, Tassilo et al**
  **Buzzi, Notaro & Antonielli d'Oulx**
  **Corso Vittorio Emanuele II, 6**
  **10123 Torino (IT)**

(54) **ELECTRONIC CONVERTER, AND RELATED METHOD OF OPERATING AN ELECTRONIC CONVERTER**

(57)     There is described an AC/DC electronic converter. The converter includes two input terminals for receiving an AC voltage ($V_{in}$) and two output terminals (106a, 106b) for providing a regulated voltage ($V_{out}$) or current ($i_{out}$). Moreover, the AC/DC electronic converter includes a rectifier circuit and a boost converter (12).

The boost converter (12) receives at input, via a positive input terminal (104a) and a negative input terminal (104b), the DC voltage ($V_{in,DC}$) generated via the rectifier circuit, and provides at output, via a positive output terminal (106a) and a negative output terminal (106b), the regulated voltage ($V_{out}$) or current ($i_{out}$).

The electronic converter further includes a control circuit (14) configured to drive electronic switch ($S_B$) with switching cycles ($T_{SW}$) comprising a first interval, wherein electronic switch ($S_B$) is closed, and a second interval wherein electronic switch ($S_B$) is opened.

Fig. 12

**EP 3 327 915 A1**

**Description**

Technical Field

The present description relates to electronic converters. The present description is particularly useful for implementing a converter having Power Factor Correction (PFC).

Description of the Related Art

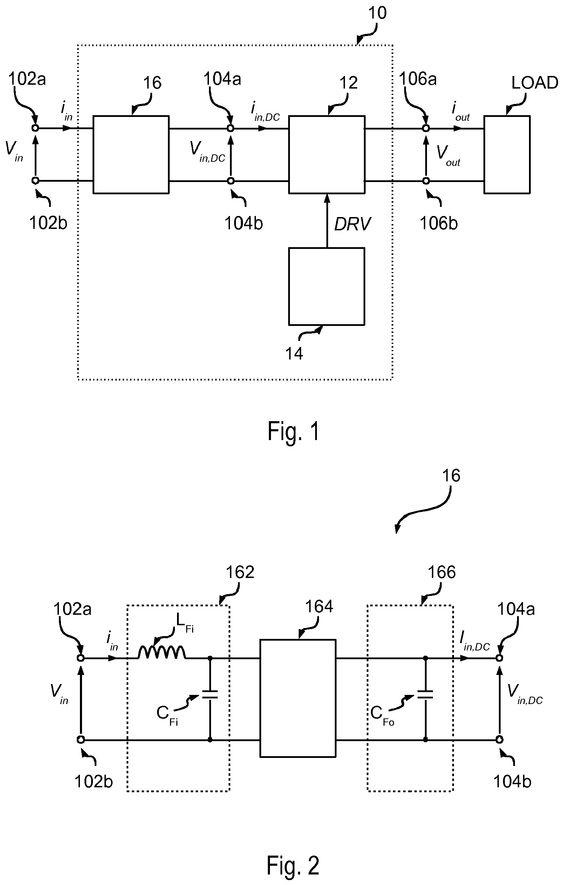

Figure 1 shows a typical scenario wherein a load LOAD is supplied via an AC/DC electronic converter 10.

Specifically, in the presently considered example, electronic converter 10 includes two input terminals 102a and 102b and two output terminals 106a and 106b.

In the presently considered example, AC/DC electronic converter 10 includes a DC/DC converter 12, receiving via terminals 104a and 104b a supply signal, i.e. a voltage $V_{in,DC}$ and a current $i_{in,DC}$, and providing through output terminals 106a and 106b a second supply signal, i.e. a voltage $V_{out}$ and a current $i_{out}$.

For example, DC/DC converter 12 may be a DC/DC switching supply. For example, non-insulated electronic converters are *"buck"*, *"boost"*, *"buck-boost"*, *"Cuk"* *"SEPIC"* and *"ZETA"* converters. On the other hand, insulated converters are *"flyback"* or *"forward"* converters. Such types of converters are well known to a person skilled in the art.

Therefore, electronic converter 10 further comprises a control circuit 14, configured to generate one or more driving signals *DRV* for driving the DC/DC switching stage so as to regulate voltage $V_{out}$ and/or current $i_{out}$ to a desired value.

As mentioned in the foregoing, electronic converter 10 is supplied with an AC supply signal (e.g. from the mains), i.e. with a voltage $V_{in}$ and a current $i_{in}$. Therefore, electronic converter 10 may include, between input terminals 102a and 102b and input terminals 104a and 104b of the DC/DC switching supply 12, a rectifier circuit 16 configured to convert the AC input current into a DC current; in other words, rectifier circuit 16 receives, via input terminals 102a and 102b, AC voltage $V_{in}$ and provides, via output terminals 104a and 104b, a DC voltage $V_{in,DC}$.

For example, as shown in Figure 2, such a rectifier circuit 16 may include a rectifier 164, e.g. a diode bridge rectifier, and optionally one or more filter circuits. For example, Figure 2 shows an input filter 162 connected between input terminals 102a and 102b, i.e. voltage $V_{in}$, and the input of rectifier 164, and an output filter 166 connected between the output of rectifier 164 and the input terminals of DC/DC switching supply 12.

Generally speaking, said filters 162 and 166 are merely optional. For example, filter 162 may include an LC filter, i.e. a capacitor $C_{Fi}$ connected in parallel with the input of rectifier 164, and an inductor $L_{Fi}$ connected between one of the input terminals 102a or 102b and the respective input terminal of rectifier 164. On the other hand, filter 164 may include a C filter, i.e. a capacitor $C_{Fo}$ connected in parallel with the output of rectifier 140, i.e. between the terminals 104a and 104b.

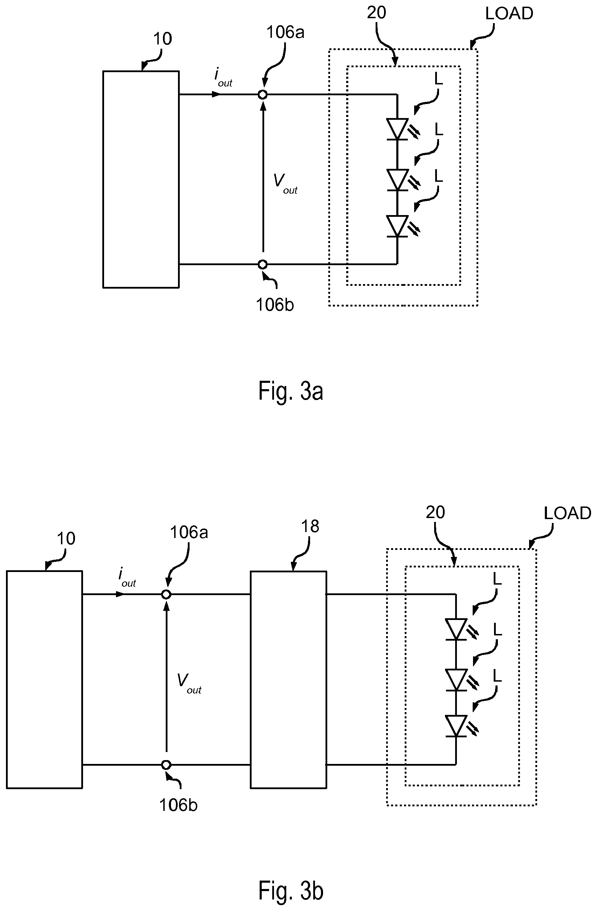

As shown in Figure 3a, load LOAD may be for example a lighting module 20 including e.g. at least one LED L. For example, in this case electronic converter 10 may provide a regulated current, which is useful for supplying a LED lighting module 20.

Generally speaking, as shown in Figure 3b, one or more further electronic converters 18 may be interposed between output 106a and 106b of electronic converter 10 and load LOAD. For example, the first electronic converter 10 may supply a regulated voltage $V_{out}$, and the second electronic converter 18 may supply a regulated current.

Therefore, the electronic converter 10 shown in Figure 1 is often supplied by the mains. In this context, the power factor of the system is therefore particularly important. Specifically, the Power Factor (PF) of an AC electrical system is defined as the ratio between the module of the active power vector supplying an electrical load, i.e. converter 10, and the module of the apparent power vector flowing in the circuit, and is equal to the cosine of the offset angle encompassed between the voltage and power vectors.

Therefore, it would be useful if converter 10 could achieve a high power-factor, i.e. approaching 1. For this reason, electronic converter 10 should be an electronic converter with Power Factor Correction (PFC).

Generally speaking, such a PFC electronic converter 10 may also supply load LOAD directly, as shown in Figure 3a. However, this choice lends itself typically only to small loads, while for high powers it is advantageous to use a second DC/DC electronic converter 18, as shown in Figure 3b. As a matter of fact, such second electronic converter 18 may have optimized efficiency and no longer needs to take the power factor into account.

In this scenario, also Total Harmonic Distortion (THD) plays an important role. Specifically, this parameter indicates the distortion that the converter introduces into the electrical signals flowing therethrough.

The person skilled in the art will appreciate that various solutions and architectures are known for a PFC electronic converter 10.

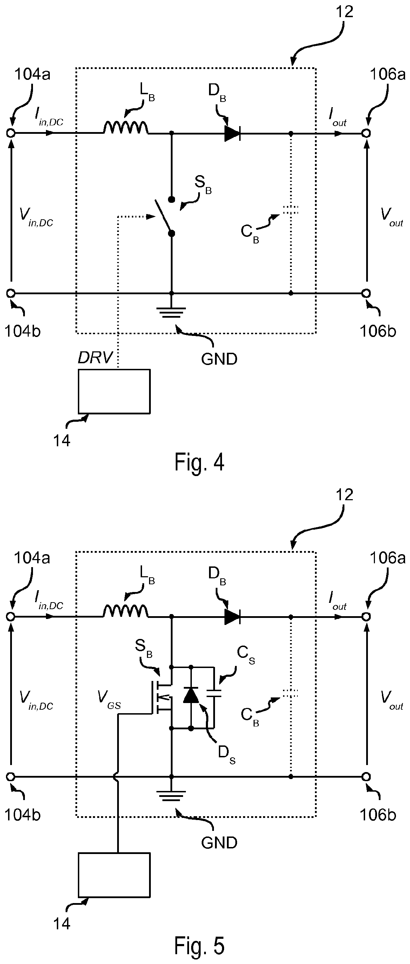

For example, Figure 4 shows the DC/DC switching stage of a PFC converter based on a boost converter.

Specifically, a boost converter includes an inductor $L_B$ and a diode $D_B$ which are connected (e.g. directly) in series between the positive input terminal 104 and the positive output terminal 106a, while the negative output terminal 106b is connected (e.g. directly) to the negative input terminal 104b, which constitutes a ground GND. Specifically, in the presently considered example, the anode of diode $D_B$ is connected to inductor $L_B$ and the cathode of diode $D_B$ is connected to terminal 106a.

A boost converter moreover includes an electronic switch $S_B$ connected (e.g. directly) between the intermediate point between inductor $L_B$ and diode $D_B$, and ground GND.

A boost converter often also includes an output capacitor $C_B$ connected (e.g. directly) between terminals 106a and 106b. Generally speaking, said output capacitor $C_B$ is merely optional. As a matter of fact, said capacitor $C_B$ has the function, for example in the case of a resistive load, of keeping output voltage $V_{out}$ substantially constant. On the contrary, if load LOAD is a LED module 20 including a chain of LEDS connected (e.g. directly) between terminals 106a and 106b, output voltage $V_{out}$ is constrained by the LED voltage itself, and therefore capacitor $C_B$ may be omitted, in particular for LEDs L having low dynamic resistance.

Therefore, when switch $S_B$ is closed (on state), the current flowing through inductor $L_B$ increases. On the other hand, when switch $S_B$ is open (off state), the only path available to the current of inductor $L_B$ passes through diode $D_B$ towards output 106a/106b, thereby optionally charging capacity $C_B$. This induces a transfer of the energy accumulated during the on state towards output 106.

Generally speaking, therefore, the increase of current $i_{LB}$ flowing through inductor $L_B$, i.e. current $i_{in,DC}$, during the on state depends on the duration of the on state and on the input voltage. Specifically, assuming an ideal behaviour of boost converter 12, input current $i_{in}$ is substantially proportional to voltage $V_{in}$ if the closing time of switch $S_B$ remains constant. Therefore, the boost converter is particularly suitable to be used within a PFC converter.

Nevertheless, the electronic converter does not have an ideal behaviour, especially when input voltage $V_{in}$ is low, i.e. in the zero-crossing area.

Specifically, in this area, control circuit 14 should therefore control the absorption of current $I_{in}$ in one of these ways:

- by directly controlling current $i_{LB}$ flowing through inductor $L_B$, i.e. current $i_{in,DC}$, e.g. by switching switch $S_B$ off when the current flowing through switch $S_B$ reaches a required value; or
- by indirectly controlling current $i_{LB}$ by regulating the closing time of switch $S_B$.

Object and Summary

One or more embodiments aim at providing solutions for a PFC electronic converter.

According to one or more embodiments, said object may be achieved thanks to an electronic converter having the features set forth in the claims that follow. The embodiments also concern a corresponding method of operating a converter.

The claims are an integral part of the technical teaching provided herein with reference to the embodiments.

As previously mentioned, the present description refers to an AC/DC electronic converter, specifically a PFC electronic converter. Therefore, the converter includes two input terminals, for receiving an AC voltage, and two output terminals for providing a regulated voltage or current.

In various embodiments, the converter includes a rectifier circuit and a DC/DC electronic converter. Specifically, the rectifier circuit is configured to receive AC voltage at input and to provide DC voltage at output.

In various embodiments, the DC/DC converter is a boost converter. Therefore, the boost converter receives at input, via a positive input terminal and a negative input terminal, the DC voltage generated by the rectifier circuit, and provides at output, via a positive output terminal and a negative output terminal, the regulated voltage or current.

For example, in various embodiments, the boost converter includes an inductor and a diode, connected in series between the positive input terminal and the positive output terminal, and the negative output terminal is connected to the negative input terminal, which represents ground.

In various embodiments, the boost converter moreover includes an electronic switch connected between the intermediate point between the inductor and the diode, and ground. For example, the electronic switch may be a field-effect transistor, preferably with n channel.

As a consequence, generally speaking, a capacity is associated at the intermediate point between the inductor and the diode, e.g. the capacity between the drain and source terminals of a field-effect transistor and/or an additional capacitor.

In various embodiments, the converter moreover includes a control circuit, configured to drive the electronic switch with switching cycles including a first interval, during which the electronic converter is closed, and a second interval during which the electronic switch is open.

In various embodiments, said control circuit is configured to vary, when the electronic switch is closed, the duration of the first interval, so that the regulated voltage or current corresponds to a reference value, i.e. the control circuit opens the electronic switch after a variable time, which enables to obtain the required output voltage or current.

When the electronic switch is opened, therefore, the voltage at the intermediate point between the inductor and the diode starts oscillating, due to the capacity associated to said intermediate point.

Therefore, in various embodiments, the control circuit is configured to detect an increase of the voltage at the intermediate point between the inductor and the diode, and to close the electronic switch again when said voltage increase is detected.

For example, in various embodiments, the control circuit includes a detection circuit configured to determine a signal indicating that the voltage at the intermediate point between the inductor and the diode increases when the electronic switch is open.

For example, in various embodiments, the detection circuit includes detection means configured to generate a measurement signal, preferably a voltage, indicative of the voltage variation at the intermediate point between the inductor and the diode.

For example, in various embodiments, the detection means include a capacitive divider including two capacitors connected in series between the intermediate point between the inductor and the diode, and ground. In this case, the intermediate point between both capacitors may provide the measurement signal. Alternatively, only one capacitor may be used, wherein a first terminal of such a capacitor is connected to the intermediate point between the inductor and the diode, and a second terminal of the capacitor provides the measurement signal.

In various embodiments, the detection circuit may also include means configured to set the measurement signal to a predetermined value when the electronic switch is off.

In various embodiments, the detection circuit may also include means configured to limit the measurement signal between a minimum value and a maximum value. For example, such means may include two clamp diodes.

In various embodiments, the detection circuit may also include a pull-up or pull-down resistor connected to the measurement signal. Such a resistor may be useful if the converter is off, and it ensures that the measurement signal does not remain floating.

Therefore, in various embodiments, the measurement signal indicates an increase of the voltage at the intermediate point between the inductor and the diode. In various embodiments, the detection circuit therefore includes means configured to generate the signal indicating that the voltage at the intermediate point between the inductor and the diode is increasing, by comparing the measurement signal with at least one threshold.

Brief Description of the annexed Drawings

Embodiments will now be described, by way of non-limiting example only, with reference to the annexed Figures, wherein:

- Figures 1 to 4 have already been described in the foregoing,
- Figure 5 shows an electronic converter according to the present description;
- Figures 6, 7 and 8 show waveforms illustrating the operation of the electronic converter of Figure 5;
- Figures 9, 10 and 11 show waveforms illustrating the operation of an electronic converter according to the present description;
- Figure 12 shows a detailed embodiment of an electronic converter according to the present description;
- Figures 13 and 14 show waveforms illustrating the operation of the electronic converter of Figure 12;
- Figure 15 shows a further detailed embodiment of an electronic converter according to the present description; and
- Figure 16 shows waveforms illustrating the operation of the electronic converter of Figure 15.

Detailed Description of Embodiments

In the following description, various specific details are given to provide a thorough understanding of the embodiments. The embodiments may be practiced without one or several specific details, or with other methods, components, materials, etc. In other instances, well-known structures, materials, or operations are not shown or described in detail in order to avoid obscuring various aspects of the embodiments.

Reference throughout this specification to "one embodiment" or "an embodiment" means that a particular feature, structure, or characteristic described in connection with the embodiment is included in at least one embodiment. Thus, the possible appearances of the phrases "in one embodiment" or "in an embodiment" in various places throughout this specification are not necessarily all referring to the same embodiment. Furthermore, particular features, structures, or characteristics may be combined in any suitable manner in one or more embodiments.

The headings provided herein are for convenience only, and therefore do not interpret the extent of protection or scope of the embodiments.

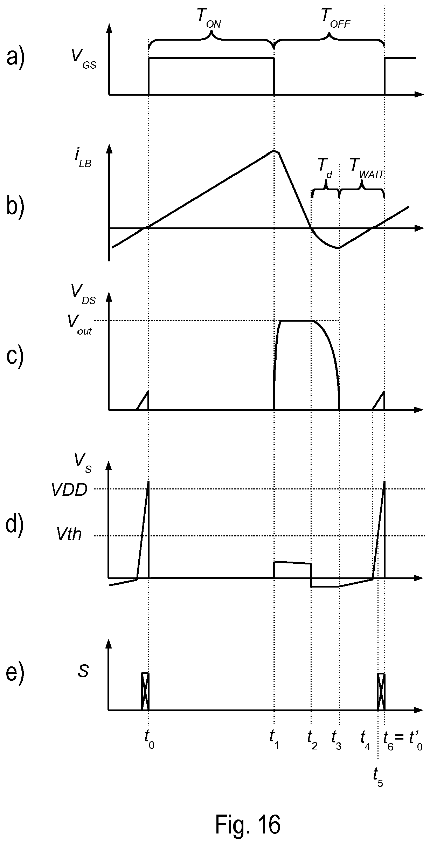

In the following Figures 5 to 16 the parts, the elements or the components that have already been described with reference to Figures 1 to 4 are denoted by the same references previously adopted in said Figures; the description of such previously described references will not be repeated in the following in order not to overburden the present detailed description.

As mentioned in the foregoing, the present description provides solutions which enable implementing an electronic converter having power factor correction.

Figure 5 generally shows the circuit diagram of Figure 4, i.e. the switching stage 12 of a PFC electronic converter 10 (see also Figure 1) based on a boost converter which may be used, for example, in the systems shown in Figures 3a or 3b.

Therefore, in the presently considered embodiment, switching stage 12 includes two input terminals 104a and 104b for receiving a DC voltage $V_{in,DC}$ and two output terminals 106a and 106b for providing a regulated voltage $V_{out}$ or a regulated current $i_{out}$.

In the presently considered embodiment, switching stage 12 includes an inductor $L_B$ and a diode $D_B$ which are connected (e.g. directly) in series between the positive input terminal and the positive output terminal 106a, while the negative output terminal 106b is connected (e.g. directly) to the negative input terminal 104b, which represents a ground GND. Specifically, in the presently considered embodiment, the anode of diode $D_B$ is connected to inductor $L_B$, and the cathode of diode $D_B$ is connected to terminal 106a.

A boost electronic converter moreover includes an electronic switch $S_B$ connected (e.g. directly) between the intermediate point between inductor $L_B$ and diode $D_B$, and ground GND. Generally speaking, diode $D_B$ may therefore be implemented with any other electronic switch $D_B$ which is driven in such a way that switch $D_B$ is closed when switch $S_B$ is open and switch $D_B$ is open when switch $S_B$ is closed.

Specifically, in the presently considered embodiment, electronic switch $S_B$ is a Field-Effect Transistor (FET), such as an n-channel FET. For example, electronic switch $S_B$ may be a Metal-Oxide-Semiconductor Field-Effect Transistor (MOSFET).

Therefore, in the presently considered embodiment, electronic switch has, associated thereto, a capacity $C_S$, typically the parasitic capacity of the FET between the drain and source terminals, and a diode $D_S$, typically the body diode, which are connected between the drain and source terminals of the electronic switch $S_B$. Specifically, the anode of diode $D_S$ is connected to the source terminal, and the cathode of diode $D_S$ is connected to the drain terminal.

Generally speaking, boost converter 12 may operate in a Continuous Conduction Mode (CCM), in a Discontinuous Conduction Mode (DCM) or in the Transition Mode (TM) or Boundary Mode (BM) between CCM and DCM. For example, the Boundary Mode is often used because it enables a simplified implementation of converter 12 and the achievement of low losses.

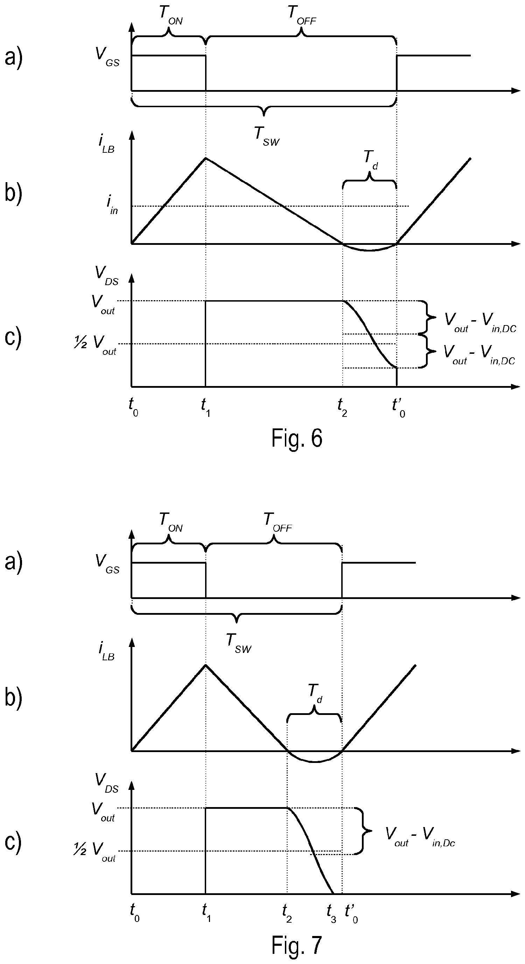

In this respect, Figure 6 shows a possible driving of electronic switch $S_B$.

Specifically, Figure 6a shows the driving signal for electronic switch $S_B$, e.g. the voltage $V_{GS}$ between the gate and source terminals of electronic switch $S_B$.

As already explained with reference to Figure 4, driving signal $V_{GS}$ includes a first interval $T_{ON}$ wherein electronic switch $S_B$ is closed, and a second interval $T_{OFF}$ wherein electronic switch $S_B$ is open, and these intervals are periodically repeated with a switching period $T_{SW}$.

Therefore, as shown in Figure 6b, when electronic switch $S_B$ is closed at an instant $t_0$, interval $T_{ON}$ begins, during which inductor $L_B$ is charged with voltage $V_{in,DC}$ which is applied between input terminals 104a and 104b, and therefore the current $i_{LB} = i_{in,DC}$ flowing through inductor $L_B$ increases.

On the other hand, when electronic switch $S_B$ is opened at an instant $t_1$, interval $T_{OFF}$ begins, during which inductor $L_B$ is discharged.

Specifically, assuming a DCM or TM/BM operation, inductor $L_B$ is completely discharged, and current $i_{LB}$ falls to zero at an instant $t_2$. Therefore, at instant $t_2$ also diode $D_B$ is opened. As a consequence, during a phase $T_d$ between instant $t_2$ and the following instant $t'_0$

(when electronic switch $S_B$ is closed again), inductor $L_B$ and capacity $C_S$ oscillate.

Specifically, as shown in Figure 6b, at the beginning of interval $T_d$ current $i_{LB}$ is negative. Therefore, during this phase, the capacity $C_S$ associated to electronic switch $S_B$ is discharged (see Figure 6c). Specifically, this behaviour may be used for closing electronic switch $S_B$ when voltage $V_{DS}$ between the drain and source terminals of electronic switch $S_B$ has reached zero, so-called Zero Voltage Switching (ZVS), or in any case is at a local minimum. Typically, this driving is also denoted valley switching.

Specifically, in the boundary mode driving, the switching at instant $t_0$ therefore takes place when voltage $V_{DS}$ between the drain and source terminals of electronic switch $S_B$ reaches zero or the first local minimum. This sort of driving is typically called quasi-resonant driving.

Specifically, the amplitude of the oscillation at capacity $C_S$, i.e. the oscillation of voltage $V_{DS}$, during interval $T_d$ depends on the input voltage $V_{in,DC}$ between terminals 104a and 104b and on the output voltage $V_{out}$ between terminals 106a and 106b.

Specifically, starting from instant $t_2$ with a voltage $V_{DS} = V_{out}$, voltage $V_{DS}$ oscillates with an amplitude $V_{in,DC} - V_{out}$.

For example, in the embodiment considered in Figure 6, $V_{in,DC} > V_{out}/2$. In this case, the minimum achievable voltage $V_{DS}$ during phase $T_d$ is:

$$V_{DS,min} = 2\ V_{in,DC} - V_{out}.$$

On the other hand, Figure 7 shows the corresponding waveform if $V_{in,DC} <= V_{out}/2$. In this case, voltage $V_{DS}$ may therefore reach zero at an instant $t_3$, i.e. the switching may take place at zero voltage. However, voltage $V_{DS}$ does not fall below zero because of diode $D_S$.

In many applications, the converter may therefore behave either as shown in Figure 7 or as shown in Figure 6, because input voltage $V_{in}$ is an AC voltage.

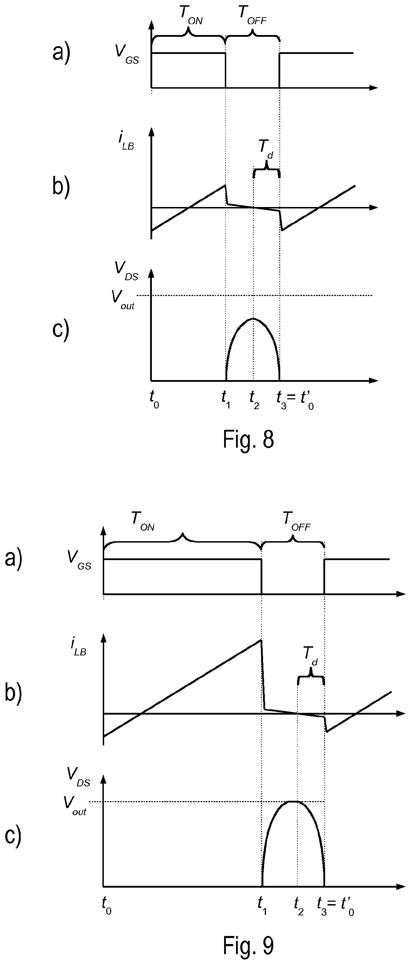

Moreover, as shown in Figure 8, when input voltage $V_{in}$ (and therefore also $V_{in,DC}$) is low, e.g. near zero, the duration of interval $T_{ON}$ may be too short, and therefore the current $i_{LB}$ reached at the end of interval $T_{ON}$, i.e. at instant $t_1$, is sufficient to charge capacitor $C_S$ and consequently voltage $V_{DS}$ does not reach output voltage $V_{out}$. As a consequence, in this case, no energy is transferred towards output 106a/106b during interval $T_{OFF}$. Therefore, during period $T_{OFF}$, inductor $L_B$ and capacity $C_{SB}$ oscillate, which is visible in Figure 8c showing voltage $V_D$). Specifically, also in this case, current $i_{LB}$ becomes negative at an instant $t_2$ and discharges capacitor $C_S$ again until voltage $V_{DS}$ reaches zero.

Therefore, by immediately switching switch $S_B$ at instant $t_3$, negative current $i_{LB}$ must first be recovered, because the first part of interval $T_{ON}$ is necessary to further discharge the energy stored in inductor $L_B$, and only during the second part of interval $T_{OFF}$ current $i_{in}$ is pos-

itive. However, the duration of the second part may not be sufficient to charge inductor $L_B$ and transfer energy to the output.

As a consequence, when input voltage $V_{in}$ (and therefore also $V_{in,DC}$) is low, particularly at zero-crossing, a short time for interval $T_{ON}$ may not be sufficient to charge inductor $L_B$ in such a way that energy may be transferred to the output.

Therefore, the control circuit 14 which drives electronic switch $S_B$ should take into consideration the variation of input voltage $V_{in,DC}$.

In various embodiments, control unit 112 may therefore vary the duration of interval $T_{ON}$ as a function of voltage $V_{in}$ and/or $V_{in,DC}$. For example, in various embodiments, control unit 112 should increase the duration of interval $T_{ON}$ when the voltage is low, especially when it approaches zero. For example, to this purpose control unit 112 may use a look-up-table (LUT) wherein a respective time for interval $T_{ON}$ is associated to each voltage (or voltage interval) of $V_{in}$ and/or $V_{in,DC}$.

For example, Figure 9 shows the waveforms of Figure 8, wherein the duration of interval $T_{ON}$ is longer.

In this case, the current flowing through the inductor reaches a higher value at the end of interval $T_{ON}$, i.e. at instant $t_1$. As a consequence, voltage $V_{DS}$ may reach voltage $V_{out}$. Also in this case (see Figure 9b), current $i_{LB}$ reaches zero at instant $t_2$ and capacitor $C_S$ is discharged until voltage $V_{DS}$ reaches zero at instant $t_3$. Therefore, also in this case a first part ($i_{in} < 0$) of interval $T_{ON}$ is lost. However, by increasing the duration of interval $T_{ON}$), the duration of the second part of interval ($i_{in} > 0$) is increased.

However, this embodiment has the disadvantage of the need of determining the correct LUT or generally speaking the relationship between $T_{ON}$ and $V_{in}$, for each electronic converter and filter 162/166.

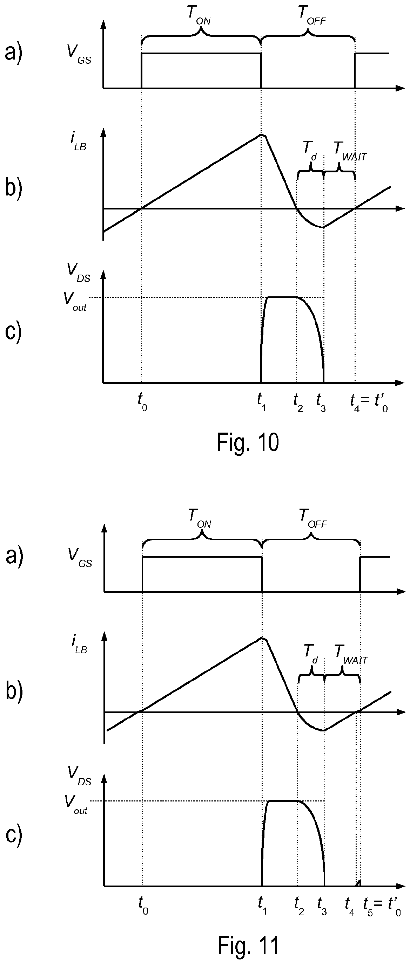

On the other hand, Figure 10 shows an embodiment wherein an interval $T_{WAIT}$ is added at the end of interval $T_d$. Specifically, such an interval begins at instant $t_3$ when voltage $V_{DS}$ falls to zero, and ends at an instant $t_4$ when current $i_{LB}$ flowing through inductor $L_B$ reaches zero (see Figure 10b). Specifically, during interval $T_{WAIT}$ the current will flow through diode $D_S$, because the current is negative (even though switch $S_B$ is open). Therefore, in this case, the interval $T_{ON}$ of the following cycle starts when current $i_{LB}$ flowing through inductor $L_B$ amounts to zero ($t'_0 = t_4$) and time $T_{ON}$ may remain constant.

For example, control circuit 14 may detect instant $t_4$ by using a current sensor, such as a shunt resistor connected in series with electronic switch $S_B$.

However, this embodiment has the drawback of needing a current sensor adapted to detect the current flowing through electronic switch $S_B$ with high accuracy. For example, for this reason shunt resistor cannot have too low a resistance, which may cause even relevant losses.

Figure 11 shows the operation of a control circuit 14 for a boost converter 12 adapted to overcome the previously outlined drawbacks.

Specifically, in the presently considered embodiment, control circuit 14 is configured to implement an interval $T_{WAIT}$ at the end of interval $T_d$; however, $S_B$ is not closed at instant $t_0$ by monitoring the current flowing through switch $S_B$, but as a function of voltage $V_{DS}$.

Specifically, as shown in Figure 11, at instant $t_2$ the current $i_{LB}$ flowing through inductor $L_B$ becomes negative, and capacity $C_S$ is discharged. Therefore, voltage $V_{DS}$ drops and reaches zero at instant $t_3$. As a consequence, diode $D_S$ is closed at instant $t_3$ and the (negative) current flows through diode $D_S$.

Therefore, also in this case, current $i_{LB}$ increases until, at instant $t_4$, current $i_{LB}$ flowing through inductor $L_B$ reaches zero again, which was detected in the embodiment described with reference to Figure 10.

However, if the switch is not closed at instant $t_4$, current $i_{LB}$ flowing through inductor $L_B$ turns positive again. As a consequence, diode $D_S$ is switched off and capacity $C_S$ is charged again. Therefore, by charging capacity $C_S$ also voltage $V_{DS}$ increases.

In various embodiments, control circuit 14 is therefore configured to detect this increase of voltage $V_{DS}$ in order to start a new switching cycle, i.e. control circuit 14 closes switch $S_B$ at an instant $t_5$ when control circuit 14 detects an increase of the voltage $V_{DS}$.

Therefore, in the presently considered embodiment, electronic switch $S_B$ is not closed at zero voltage. However, the level may nonetheless be kept low, and the losses are lower than in the solution featuring current measurement, which requires e.g. a shunt resistor.

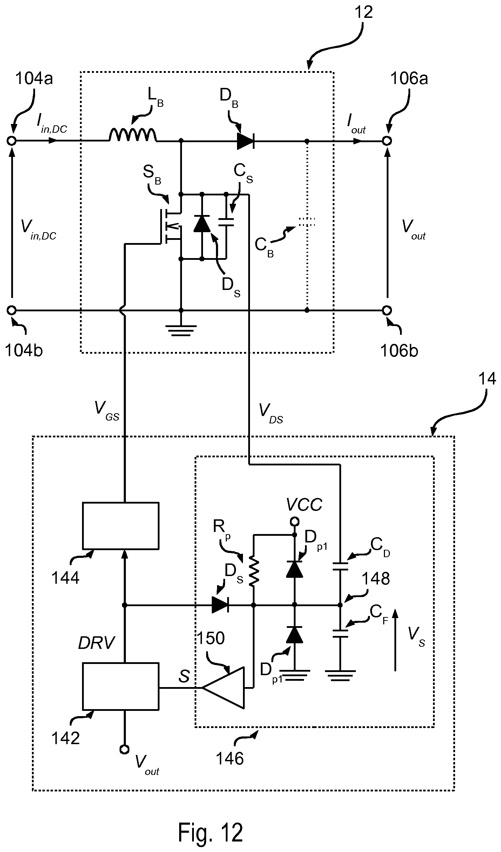

Figure 12 shows a first embodiment of control circuit 14.

In the presently considered embodiment, control circuit 14 includes a driver 144 for switch $S_B$, such as for example an n-channel MOS driver. Specifically, driver 144 is configured to receive at input a digital control signal *DRV* and to generate the driving signal for switch $S_B$, i.e. voltage $V_{GS}$ between the gate and source terminals of FET $S_B$. For example, typically, when control signal *DRV* is high (i.e. has a first logic level), driver 144 generates voltage $V_{GS}$ in such a way as to close transistor $S_B$, and when control signal *DRV* is low (i.e. has a second logic level), driver 144 generates voltage $V_{GS}$ in such a way as to open transistor $S_B$.

In the presently considered embodiment, control circuit 14 further includes a control unit 142, configured to generate control signal *DRV* for driver 144. Generally speaking, control unit 142 may be an analog and/or digital circuit, such as e.g. a microprocessor programmed via software code.

Specifically, in various embodiments, control circuit 14 moreover includes a detection circuit 146, configured to monitor voltage $V_{DS}$ between the drain and source terminals of transistor $S_B$, i.e. the voltage at the intermediate point between inductor $L_B$ and diode $D_B$, and to generate a control signal $S$ indicative of whether voltage $V_{DS}$ is increasing.

For example, in the presently considered embodiment, detection circuit 146 includes a capacitive divider including two capacitors $C_D$ and $C_F$ connected (e.g. directly) between the drain terminal of transistor $S_B$ and ground GND, i.e. the source terminal of transistor $S_B$. Specifically, in the presently considered embodiment, a first terminal of capacitor $C_D$ is connected (e.g. directly) to the drain terminal of transistor $S_B$, the second terminal of capacitor $C_D$ is connected (e.g. directly) to a first terminal of capacitor $C_F$, and the second terminal of capacitor $C_D$ is connected (e.g. directly) to ground GND. For example, in various embodiments, the capacity of capacitor $C_D$ is higher than the capacity of capacitor $C_F$. For this reason, generally speaking, the second capacitor $C_F$ is purely optional, and may be useful for filtering signal S. For example, the capacity of capacitor $C_D$ may range between 47 pF (picofarad) and 1 nF (nanofarad), and the capacity of $C_F$ may range between 10 pF and 220 pF. Generally speaking, also in this case the second capacitor is purely optional, and may be useful for filtering signal S.

Therefore, the intermediate point 148 of the capacitive divider provides a voltage $V_S$ which is indicative of voltage $V_{DS}$. Generally speaking, it would be possible to use a voltage divider with two resistors. The capacitive divider or the voltage divider is typically required, because voltage $V_{DS}$ may exceed the maximum allowable voltage for control unit 142, e.g. in case a microprocessor is used. For example, voltage $V_{out}$ may also be included in the range of 350-500 VDC. Generally speaking, it is also possible to use other circuits, configured to generate a signal $V_S$ indicative of voltage $V_{DS}$. For example, the circuit may also include an amplifier.

Therefore, control unit 142 may monitor the signal at node 148, i.e. voltage $V_S$, in order to detect an increase in voltage $V_{DS}$.

For example, in various embodiments, control circuit 14, e.g. control unit 142 or detection circuit 146, may include a comparator 150, such as a Schmitt trigger, configured to generate a signal $S$ by comparing voltage $V_S$ with a reference threshold, such as e.g. $VDD/2$. For example, such a comparator/Schmitt trigger is typically provided for the input pins of a microprocessor, and therefore it may be integrated into control unit 142.

For example, in various embodiments, the respective connection pin of control unit 142 may be configured to generate an interrupt which therefore enables an automatic detection of the increase of voltage $V_{DS}$. However, control unit 142 may also periodically monitor signal $S$ in order to detect the increase of voltage $V_{DS}$.

In the presently considered embodiment, the detection circuit 146 also includes other components which lead to an improvement of the operation of the capacitive divider.

Specifically, in various embodiments, detection circuit 116 may include two clamp diodes $D_{p1}$ and $D_{p2}$, which limit voltage $V_S$. For example, in the presently con-

sidered embodiment, clamp diodes $D_{p1}$ and $D_{p2}$ are connected in series between a constant voltage $VCC$ (typically the supply voltage $VDD$ used by control unit 142), such as e.g. 3.3 V, and ground GND. Specifically, in the presently considered embodiment, the anode of diode $D_{p1}$ is connected (e.g. directly) to ground, the cathode of diode $D_{p1}$ is connected (e.g. directly) to the anode of diode $D_{p2}$, and the cathode of diode $D_{p2}$ is connected (e.g. directly) to voltage $VCC$. In this case, node 148 is connected (e.g. directly) at the intermediate point between both diodes $D_{p1}$ and $D_{p2}$. For example, if control unit 142 is an integrated circuit, such as e.g. a microprocessor, diodes $D_{p1}$ and $D_{p2}$ are often already present within the integrated circuit for the protection of the connection pin.

In various embodiments, the detection circuit may also include a pull-up or pull-down resistor. For example, in the presently considered embodiment, a resistor $R_P$ is used which is connected (e.g. directly) between voltage $VCC$ and node 148. Such a resistor $R_P$ is useful for ensuring a static condition, so that voltage VS does not remain floating. For example, this resistor may have a resistance in the range from a few kohm to a few megaohm.

In various embodiments, the detection circuit also includes means for resetting capacitor $C_F$.

For example, in the presently considered embodiment, for this purpose a diode $D_S$ is used which is connected (e.g. directly) between control signal $DRV$ and node 148. Specifically, the anode of diode $D_S$ is connected (e.g. directly) to signal $DRV$, or the associated output of control unit 142 and the associated input of driver 144, and the cathode is connected (e.g. directly) to node 148.

Therefore, assuming that also control signal $DRV$ varies between zero volt and $VDD$, capacitor $C_F$, is charged substantially to voltage $VDD$ (less the forward voltage $V_F$ of diode $D_S$, such as e.g. 0.7 V) when control signal $DRV$ is high. As will be better detailed in the following, this diode is adapted to inhibit a trigger in signal $S$ when voltage $V_{DS}$ rises after instant $t_1$. Therefore, this diode is merely optional, because control unit 142 may also discard this trigger.

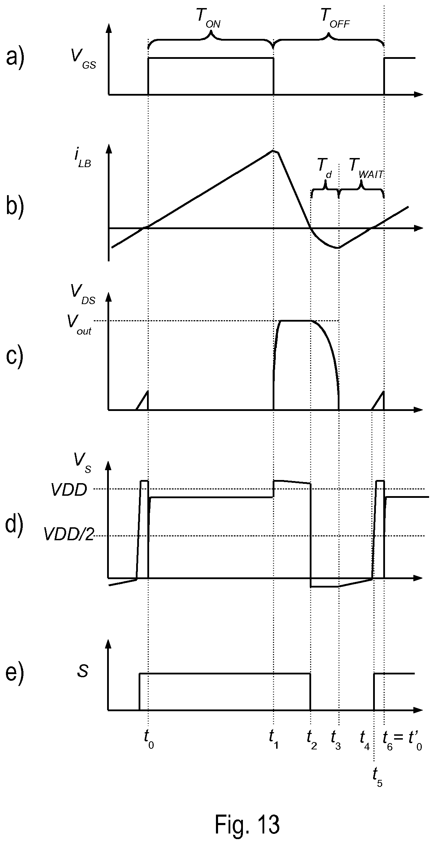

The operation of control circuit 14, specifically of detection circuit 146 shown in Figure 12, will now be described with reference to Figure 13, which shows a typical switching cycle.

Specifically, Figure 13 shows:

a) voltage $V_{GS}$, which substantially corresponds to control signal $DRT$;
b) current $i_{LB}$ flowing through inductor $L_B$,
c) voltage $V_{DS}$,
d) voltage $V_S$, and
e) signal S.

Also in this case, switch $S_B$ is closed at instant $t_0$. For example, in the presently considered embodiment, control unit 142 may set control signal $DRV$ to high.

Therefore, during this step $T_{ON}$, current $i_{LB}$ flowing through inductor $L_B$ increases.

During this phase, diode $D_S$ sets node 148 to high, e.g. $VDD - V_F$. Therefore, signal $S$ is high.

At an instant $t_1$, switch $S_B$ is opened. For example, in the presently considered embodiment, processing unit 142 may set control signal $DRV$ to low.

In various embodiments, control unit 142 may be configured to vary the duration of interval $T_{ON}$ between instants $t_0$ and $t_1$ as a function of output voltage $V_{out}$ or of output current $i_{out}$. For example, by providing a constant voltage $V_{out}$, such a voltage tends to decrease when input voltage $V_{in}$ falls (assuming that the time for interval $T_{ON}$ remains constant). Therefore, control unit 142 will increase the duration of interval $T_{ON}$ in such a way as to increase again voltage $V_{out}$ to the desired value.

Therefore, in this phase, current $i_{LB}$ charges capacitor $C_S$ until voltage $V_{DS}$ reaches voltage $V_{out}$, and subsequently current $i_{LB}$ is transferred towards output 106. Therefore, during this step ($t_1$-$t_2$), current $i_{LB}$ decreases until current $i_{LB}$ reaches zero at instant $t_2$.

The variation of voltage $V_{DS}$ is also transferred to capacitor $C_F$, i.e. voltage $V_S$ increases. However, thanks to the clamp diodes, voltage $V_S$ is limited to $VDD + V_F$.

From instant $t_2$, current $i_{LB}$ is negative, and capacity $C_S$ is discharged. Therefore, also voltage $V_S$ decreases. Specifically, also in this case voltage $V_S$ is limited, via the clamp diodes, to a voltage substantially corresponding to $-V_F$.

Therefore, a short time after instant $t_2$, signal $S$ falls to zero, because voltage $V_S$ falls below the threshold of comparator 150, e.g. below $VDD/2$.

Consequently, voltage $V_S$ and signal S stay low throughout period ($t_2$-$t_4$) during which current $i_{LB}$ is negative, i.e. also at the instant when voltage $V_{DS}$ reaches zero.

At instant $t_4$, current $i_{LB}$ becomes positive and charges capacity $C_S$. This variation of voltage $V_{DS}$ is also transferred, via capacitor $C_D$, to capacitor $C_F$, and voltage $V_S$ rapidly increases.

Therefore, after a short interval, comparator 150 detects that voltage $V_S$ has exceeded the reference threshold, e.g. $VDD/2$, and signal $S$ is set to high at an instant $t_5$.

When control unit 142 has detected the variation of signal $S$ at an instant $t_6$, control unit 142 may start a new cycle, by setting control signal $DRV$ e.g. to high.

Therefore, in the presently considered embodiment, the control circuit is configured to close switch $S_B$ when signal $S$ indicates that voltage $V_{DS}$ is increasing, while the duration of the on time during which switch $S_B$ is closed is determined as a function of the output voltage or current.

If voltage $V_{DS}$ does not fall to zero, as shown in Figure 6, the circuit shown in Figure 12 in any case detects when voltage $V_{DS}$ increases again.

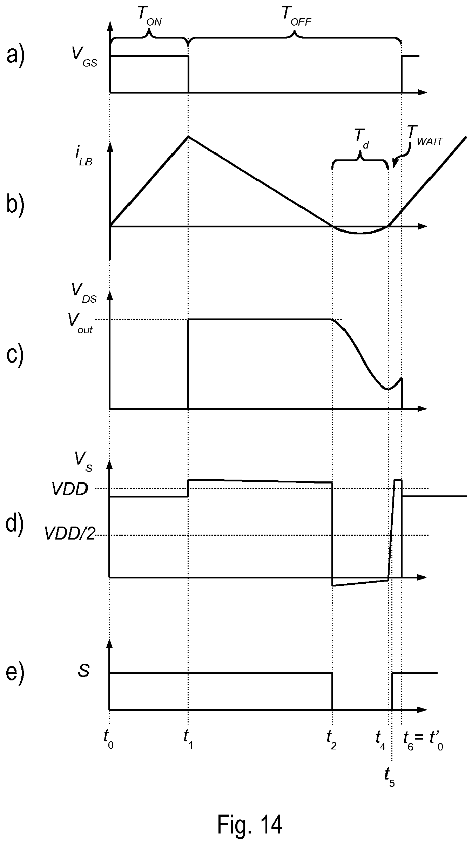

Specifically, as shown in Figure 14, also in this case detection circuit 146, specifically diode $D_S$, keeps signal $S$ high during interval $T_{ON}$ ($t_0$-$t_1$). Therefore, comparator 150 sets signal $S$ to high.

At instant $t_1$, switch $S_B$ is opened. Therefore, at instant $t_1$ current $i_{LB}$ charges capacity $C_S$ and voltage $V_{DS}$ increases. Detection circuit 146, specifically capacitor $C_D$, transfers this increase of voltage $V_{DS}$ to voltage $V_S$, which however is limited by clamp diodes $D_{P1}$/$D_{P2}$. However, because the level was already high, signal S does not change its level.

Once current $I_{LB}$ reaches zero at instant $t_2$, capacity $C_S$ is discharged and voltage $V_{DS}$ decreases. Detection circuit 146, specifically capacitor $C_D$, transfers this decrease of voltage $V_{DS}$ to voltage $V_S$, which however is limited by clamps $D_{P1}$/$D_{P2}$. Comparator 150 detects this variation, and signal S is set to low.

Specifically, because voltage $V_{in}$ is high, voltage $V_{DS}$ does not reach zero, but only a local minimum. Therefore, current $i_{LB}$ turns to zero again at instant $t_4$, and capacity $C_S$ is charged and voltage $V_{DS}$ increases. Detection circuit 146, specifically capacitor $C_D$, transfers again this increase of voltage $V_{DS}$ to voltage $V_S$, which again is limited via clamp diodes $D_{p1}$/$D_{p2}$. Comparator 150 detects this variation and signal $S$ is set to high.

When control unit 142 has detected the variation of signal S at an instant $t_6$, control unit 142 may start a new cycle, by setting control signal $DRV$ e.g. to high.

Therefore, detection circuit 146 represents a valley detector, configured to generate a signal $S$ which indicates when voltage $V_{DS}$ increases. On the other hand, control unit 142 (together with driver 144) is configured for:

- when switch $S_B$ is open, i.e. during interval $T_{OFF}$, and signal $S$ indicates that voltage $V_{DS}$ increases, closing switch $S_B$, and
- opening switch $S_B$ after an interval $T_{ON}$, wherein the duration of interval $T_{ON}$ is determined as a function of output voltage $V_{out}$ or output current $i_{out}$.

In various embodiments, detection circuit 146 may be used to transform a conventional boost transformer into a PFC converter.

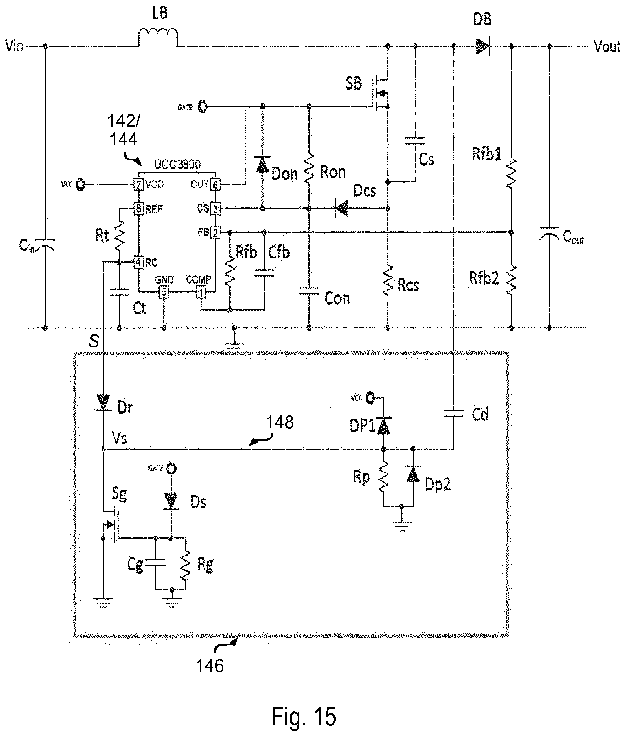

For example, Figure 15 shows a boost converter employing, as a control unit, a UCC38000 control integrated circuit.

Also in this case the boost converter includes an inductor $L_B$, a diode $D_B$ and a switch $S_B$, e.g. a FET $S_B$, which has a diode (not shown) and a capacity $C_S$ associated thereto.

Typically, the converter includes an input capacitor $C_{in}$ (which may be a part of rectifier circuit 16) and an output capacitor $C_{out}$.

Substantially, UCC3800 control unit 142 is a PWM controller, having a constant oscillation frequency, wherein the on time is regulated as a function of the output voltage (detected by a pin FB) and of the current flowing through switch $S_B$ (detected by a pin CS).

For example, in the presently considered embodiment, a feedback signal FB is generated indicative of output voltage $V_{out}$. For example, in the presently considered embodiment, feedback signal FB is obtained by using a voltage divider $R_{fb1}/R_{fb2}$ and optionally a compensation network $R_{fb}$ and $C_{fb}$. Specifically, the intermediate point of voltage divider $R_{fb1}/R_{fb}$ provides feedback signal FB. On the other hand, resistor $R_{fb}$ and capacitor $C_{fb}$ are connected in parallel between signal FB and output COMP of the UCC3800 circuit. Specifically, the signal applied at output COMP is generated within the UCC3800 circuit by a comparator which compares signal FB with a reference signal.

As mentioned in the foregoing, the UCC3800 circuit also uses a signal CS indicative of the current flowing through switch $S_B$. For example, in the presently considered embodiment, the current flowing through switch $S_B$ is detected by a shunt resistor $R_{cs}$ connected in series with switch $S_B$.

As previously mentioned, the on time $T_{ON}$ is regulated within the UCC3800 circuit as a function of signal CS and of signal FB (i.e. the resulting signal COMP). Specifically, time $T_{ON}$ finishes when the voltage at pin CS crosses the reference voltage at pin COMP.

In various embodiments, in order to make the regulation substantially independent from the current flowing through switch $S_B$, a network $R_{on}/C_{on}$ and a diode $D_{cs}$ are added. Specifically, resistor $R_{on}$ is connected between the gate terminal of transistor $S_B$ and signal CS, and capacitor $C_{on}$ is connected between signal CS and ground GND. On the other hand, diode $D_{cs}$ is connected between resistor $R_{cs}$ and signal CS. As a consequence, resistor $R_{on}$ charges capacitor $C_{on}$ when voltage $V_{GS}$ is high. Once capacitor $C_{on}$ is charged, diode $D_{cs}$ is opened and the voltage at resistor $R_{cs}$ no longer influences signal CS (except in instances of malfunction). Therefore, time $T_{ON}$ ends when the voltage at capacitor $C_{on}$ crosses reference COMP. In various embodiments, a diode $D_{on}$ may be present which is connected in parallel with resistor $R_{on}$, which enables discharging capacitor $C_{on}$ when voltage $V_{GS}$ is low.

As previously stated, UCC3800 circuit is a PWM controller, having a constant oscillation frequency. For this purpose, circuit 142 has a resistor $R_t$ and a capacitor $C_t$ connected in series associated thereto, which represent a filter RC defining the oscillation frequency of the inner oscillator.

Therefore, in order to convert the boost converter into a PFC controller as described in the foregoing, control unit 142 should be activated not at a fixed frequency, but when detector 146 detects an increase of voltage $V_{DS}$, or in general the voltage at the intermediate point between inductor $L_B$ and diode $D_B$.

Therefore, Figure 15 shows an embodiment wherein a capacitor $C_t$ is used having a very small capacity. In this case, detection circuit 146 is used for generating a signal S which deactivates charging capacitor $C_t$, until an increase of voltage $V_{DS}$ is detected.

For example, in the presently considered embodiment, capacitor $C_t$ is substantially shortcircuited, and capacitor $C_t$ is not charged when voltage $V_{DS}$ is low. On the contrary, when an increase of voltage $V_{DS}$ is detected, capacitor $C_t$ may be charged in a short time, and control unit 142 starts a new switching cycle.

Specifically, in the presently considered embodiment, signal S is applied at the intermediate point between resistor $R_t$ and capacitor $C_t$. Therefore, signal S should stay low until two conditions are satisfied:

    a) transistor $S_B$ is open, and
    b) an increase of voltage between the drain terminal of transistor $S_B$ and ground GND is detected.

If both conditions are met, signal S should be set to a high impedance state, so that capacitor $C_t$ may be charged.

For example, in the presently considered embodiment, the detection of condition a) is implemented once again via a reset circuit, which in this case has inverted levels. Therefore, in the presently considered embodiment, beside a diode $D_S$ as previously used, an electronic switch $S_g$ is added, such as e.g. an n-channel FET. Specifically, in the presently considered embodiment, the anode of diode $D_S$ is connected (e.g. directly) to voltage $V_{GS}$ and not to signal *DRV,* which at any rate represents an equivalent signal. On the other hand, the cathode of diode $D_S$ is connected (e.g. directly) to the gate terminal of transistor $S_g$. Finally, the source terminal of transistor $S_g$ is connected (e.g. directly) to ground GND. Therefore, the drain terminal of transistor $S_g$ is substantially connected to ground GND when signal $V_{GS}$ and therefore signal *DRV* is high, i.e. when switch $S_B$ is closed. As a consequence, switch $S_g$ substantially implements an inverter.

In various embodiments, the gate terminal of transistor $S_g$ may also have a filter associated thereto, e.g. a capacitor $C_g$ and a resistor $R_g$ which are connected in parallel between the gate terminal of transistor $S_g$ and ground GND. The operation of said filter will be described in the following.

On the contrary, condition b) is detected, as previously described, via a capacitive divider including a capacitor $C_d$ and the capacity between the drain and source terminals of transistor $S_g$. Therefore, in the presently considered embodiment, capacitor $C_d$ is connected (e.g. directly) between the drain terminal of transistor $S_B$, i.e. the intermediate point between $L_B$ and diode $D_B$, and the drain terminal of transistor Sg, which represents node 148 in the embodiment described with reference to Figure 12. Generally speaking, also in this case, the second capacitor is purely optional, and may be useful for filtering signal S.

Therefore, the intermediate point 148 between capacitor $C_d$ and the drain terminal of transistor $S_g$ supplies voltage $V_S$ again, which indicates if voltage $V_{DS}$ is increasing, the only difference being that in Figure 12 voltage $V_S$ is set to a high value when switch $S_B$ is closed, while in Figure 15 voltage $V_S$ is set to a low value when switch $S_B$ is closed.

Also in this case there may be provided a resistor $R_p$ to set the capacitive divider to a static condition. For example, with reference to the previously described operation, a pull-down resistor is advantageous.

As a consequence, when switch $S_B$ is closed at instant $t_0$, voltage $V_S$ is set to zero via diode $D_s$ and switch $S_g$.

On the other hand, when switch $S_B$ is opened at instant $t_1$, the (positive) current $i_{LB}$ charges capacity $C_S$ and voltage $V_{DS}$ increases. Therefore, capacitor $C_d$ transfers this variation to node 148. However, as the gate terminal of switch $S_g$ has filter $C_g/R_G$ associated thereto, switch $S_g$ still remains closed, and the current provided by capacitor $C_d$ is discharged to ground GND, i.e. such rise of voltage $V_{DS}$ is suppressed.

At instant $t_2$, current $i_{LB}$ becomes negative and voltage $V_{DS}$ decreases. Capacitor $C_d$ transfers this variation to node 148, which however is already low, and the (negative) voltage at node 148 is limited by clamp diodes $D_{p1}$ and $D_{p2}$.

Finally, when current $i_{LB}$ turns positive again at instant $t_4$, voltage $V_{DS}$ increases. Capacitor $C_d$ transfers also this variation to node 148, i.e. voltage $V_S$ increases.

In the presently considered embodiment, a diode $D_r$ is used to transfer this variation of voltage $V_S$ to capacitor $C_t$. Specifically, the anode of diode $D_r$ is connected (e.g. directly) at the intermediate point between resistor $R_t$ and capacitor $C_t$. On the other hand, the cathode of diode $D_r$ is connected (e.g. directly) to node 148. Therefore, when voltage $V_S$ is low, i.e. substantially zero, the voltage at capacitor $C_t$ is drawn to ground. On the other hand, when voltage $V_S$ rises and, at an instant $t_6$, exceeds voltage $V_{th}$ at capacitor $C_t$, diode $D_r$ opens, i.e. signal $S$ does not inhibit the charging of capacitor $C_t$ any longer. As a consequence, by charging capacitor $C_t$, control unit 142 detects an oscillation cycle and starts a new switching cycle at instant $t_6$.

Therefore, in the presently considered embodiment, the function of comparator 150 of Figure 12 is now performed by diode $D_r$. As a matter of fact, instead of diode $D_r$ other means may be used, e.g. a comparator and an electronic switch, which may be configured to selectively short-circuit capacitor $C_t$ when voltage $V_S$ is lower than a given threshold, i.e. in general as a function of the voltage at the intermediate point between inductor $L_B$ and diode $D_B$.

Generally speaking, the embodiment shown in Figure 15, featuring means to activate or deactivate the oscillator of control unit 142 as a function of voltage $V_{DS}$, i.e. the voltage at the intermediate point between inductor $L_B$ and diode $D_B$, may also be applied to other controllers with current and/or voltage control. As a matter of fact, the circuit shown in Figure 15 substantially transforms a circuit having a fixed switching frequency and PWM modulation into a quasi-resonant circuit, wherein the on time

$T_{ON}$ is varied (i.e. increased or decreased) as a function of the output voltage or current.

Of course, without prejudice to the principle of the invention, the implementation details and the embodiments may vary, even appreciably, with respect to what has been described herein by way of non-limiting example only, without departing from the extent of protection as defined by the annexed claims.

**Claims**

1. An electronic converter comprising:

   - two input terminals (102a, 102b) for receiving an AC voltage ($V_{in}$) and two output terminals (106a, 106b) for providing a regulated voltage ($V_{out}$) or current ($i_{out}$) ;
   - a rectifier circuit (16) configured for receiving at input said AC voltage ($V_{in}$) and providing at output a DC voltage ($V_{in,DC}$);
   - a boost converter (12) configured for receiving at input via a positive input terminal (104a) and a negative input terminal (104b) said DC voltage ($V_{in,DC}$) and providing at output via a positive output terminal (106a) and a negative output terminal (106b) said regulated voltage ($V_{out}$) or current ($i_{out}$), said boost converter (12) comprising:

      a) an inductor ($L_B$) and a diode ($D_B$) connected in series between said positive input terminal (104a) and said positive output terminal (106a), wherein said negative output terminal (106b) is connected to said negative input terminal (104b), which represents a ground (GND),
      b) an electronic switch ($S_B$) connected between the intermediate point between said inductor ($L_B$) and said diode ($D_B$), and said ground (GND), wherein a capacity ($C_S$) is associated with the intermediate point between said inductor ($L_B$) and said diode ($D_B$);

      - a control circuit (14) configured to drive said electronic switch ($S_B$) with switching cycles ($T_{SW}$) comprising a first interval ($T_{ON}$) wherein said electronic switch ($S_B$) is closed and a second interval ($T_{OFF}$) wherein said electronic switch ($S_B$) is opened;

      **characterized in that** said control circuit (14) is configured for:

      - when said electronic switch ($S_B$) is opened:

         a) detecting (146) an increase of the voltage ($V_{DS}$) at the intermediate point between said inductor ($L_B$) and said diode ($D_B$);
b) closing said electronic switch ($S_B$) when an increase of the voltage ($V_{DS}$) at the intermediate point between said inductor ($L_B$) and said diode ($D_B$) is detected;

- when said electronic switch ($S_B$) is closed:

a) varying the duration of said first interval ($T_{ON}$) such that said regulated voltage ($V_{out}$) or current ($i_{out}$) corresponds to a reference value.

2. Electronic converter according to Claim 1, wherein said electronic switch ($S_B$) is a field effect transistor, preferably with n channel.

3. Electronic converter according to Claim 1 or Claim 2, wherein said control circuit (14) comprises a detection circuit (146) configured to determine a signal (S) indicative of the fact that the voltage ($V_{DS}$) at the intermediate point between said inductor ($L_B$) and said diode ($D_B$) increases when said electronic switch ($S_B$) is opened.

4. Electronic converter according to Claim 3, wherein said detection circuit (146) comprises detection means ($C_D$, $C_F$; $C_d$) configured to generate a measurement signal ($V_S$), preferable a voltage, indicative of the variation of the voltage ($V_{DS}$) at the intermediate point between said inductor ($L_B$) and said diode ($D_B$).

5. Electronic converter according to Claim 4, wherein said detection means ($C_D$, $C_F$; $C_d$) comprise:

- a capacitor ($C_D$; $C_d$), wherein a first terminal of said capacitor ($C_D$; $C_d$) is connected to said intermediate point between said inductor ($L_B$) and said diode ($D_B$), and a second terminal of said capacitor ($C_D$; $C_d$) provides said measurement signal ($V_S$); or
- a capacitive voltage divider comprising two capacitors ($C_D$, $C_F$) connected in series between said intermediate point between said inductor ($L_B$) and said diode ($D_B$), and said ground (GND), wherein the intermediate point between said two capacitors ($C_D$, $C_F$) provides said measurement signal ($V_S$).

6. Electronic converter according to any of claims 3 to 5, wherein said detection circuit (146) comprises means ($D_S$; $D_s$, $S_g$, $C_g$, $R_g$) configured to set said measurement signal ($V_S$) to a predetermined value when said electronic switch ($S_B$) is closed.

7. Electronic converter according to any of claims 3 to 6, wherein said detection circuit (146) comprises

means ($D_{p1}$ and $D_{p2}$) configured to limit said measurement signal ($V_S$) between a minimum value and a maximum value.

8. Electronic converter according to Claim 7, wherein said means ($D_{p1}$ and $D_{p2}$) configured to limit said measurement signal ($V_S$) between a minimum value and a maximum value comprise two clamping diodes ($D_{p1}$, $D_{p2}$).

9. Electronic converter according to any of claims 3 to 8, wherein said detection circuit (146) comprises a pull-up ($R_P$) or pull-down ($R_p$) resistor connected to said measurement signal ($V_S$).

10. Electronic converter according to any of claims 3 to 9, wherein said detection circuit (146) comprises means (150; $D_r$) configured to generate said signal (S) indicative of the fact that the voltage ($V_{DS}$) at the intermediate point between said inductor ($L_B$) and said diode ($D_B$) increases by comparing said measurement signal ($V_S$) with at least one threshold.

11. A method of operating an electronic converter according to any of the previous claims, comprising the steps of:

- when said electronic switch ($S_B$) is opened:

a) detecting (146) an increase of the voltage ($V_{DS}$) at the intermediate point between said inductor ($L_B$) and said diode ($D_B$);
b) closing said electronic switch ($S_B$) when an increase of the voltage ($V_{DS}$) at the intermediate point between said inductor ($L_B$) and said diode ($D_B$) is detected;

- when said electronic switch ($S_B$) is closed:

a) varying the duration of said first interval ($T_{ON}$) such that said regulated voltage ($V_{out}$) or current ($i_{out}$) corresponds to a reference value.

10

102a        16           104a              12          106a       LOAD

$i_{in}$                    $i_{in,DC}$                      $i_{out}$

$V_{in}$              $V_{in,DC}$                        $V_{out}$

102b          104b                           106b

$DRV$

14

## Fig. 1

16

162              164              166

102a                                                      104a

$i_{in}$        $L_{Fi}$                                  $I_{in,DC}$

$V_{in}$                                                  $V_{in,DC}$

$C_{Fi}$                    $C_{Fo}$

102b                                                      104b

## Fig. 2

Fig. 3a

Fig. 3b

Fig. 4

Fig. 5

Fig. 6

Fig. 7

Fig. 8

Fig. 9

a) $V_{GS}$

$T_{ON}$   $T_{OFF}$

b) $i_{LB}$

$T_d$   $T_{WAIT}$

c) $V_{DS}$

$V_{out}$

$t_0$   $t_1$   $t_2$   $t_3$   $t_4 = t'_0$

Fig. 10

a) $V_{GS}$

$T_{ON}$   $T_{OFF}$

b) $i_{LB}$

$T_d$   $T_{WAIT}$

c) $V_{DS}$

$V_{out}$

$t_0$   $t_1$   $t_2$   $t_3$   $t_4$   $t_5 = t'_0$

Fig. 11

Fig. 12

Fig. 13

Fig. 14

Fig. 15

Fig. 16

Europäisches
Patentamt

European
Patent Office

Office européen
des brevets

# EUROPEAN SEARCH REPORT

Application Number

EP 17 20 2978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/111955 A1 (HWANG BO HYUN [KR] ET AL) 21 April 2016 (2016-04-21)<br>* paragraphs [0055] - [0065], [0073], [0074], [0081], [0083], [0098] - [0104]; figure 5 *<br>* paragraphs [0191], [0192]; figure 8 *<br>* paragraphs [0193], [0196] - [0198], [0200], [0202], [0206] - [0209], [0265], [0266] - [0270]; figure 9 * | 1-11 | INV.<br>H02M1/42<br>H02M3/156 |
| A | US 4 683 529 A (BUCHER II JAMES D [US]) 28 July 1987 (1987-07-28)<br>* column 3, lines 27-30,45-47,60-63; figure 1 *<br>* column 4, lines 7-13,22-25 *<br>* column 5, lines 32-42; figure 2 *<br>* column 6, lines 19-22 *<br>* column 8, lines 21-28,51-53; figure 5 *<br>* column 10, lines 58-68; figure 6 * | 1-11 | |
| A | US 2011/031949 A1 (ZHANG CHENG [NL] ET AL) 10 February 2011 (2011-02-10)<br>* paragraphs [0005], [0008]; figure 1 *<br>* paragraph [0014]; figure 2 *<br>* paragraph [0017]; figures 4,5 * | 1-11 | TECHNICAL FIELDS SEARCHED (IPC)<br><br>H02M |

The present search report has been drawn up for all claims

| Place of search | Date of completion of the search | Examiner |
|---|---|---|
| Munich | 15 March 2018 | Martínez Martínez, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 20 2978

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2018

| Patent document cited in search report | Publication date | Patent family member(s) | | Publication date |
|---|---|---|---|---|
| US 2016111955 A1 | 21-04-2016 | CN | 105529912 A | 27-04-2016 |
| | | KR | 20160044791 A | 26-04-2016 |
| | | US | 2016111955 A1 | 21-04-2016 |
| US 4683529 A | 28-07-1987 | NONE | | |
| US 2011031949 A1 | 10-02-2011 | EP | 2269291 A1 | 05-01-2011 |
| | | US | 2011031949 A1 | 10-02-2011 |
| | | WO | 2009128023 A1 | 22-10-2009 |

EPO FORM P0459

For more details about this annex : see Official Journal of the European Patent Office, No. 12/82